# EUROPÄISCHE PATENTSCHRIFT

(11) **EP 0 438 122 B1**
(45) Veröffentlichungstag und Bekanntmachung des Hinweises auf die Patenterteilung: **01.12.1993**
(21) Anmeldenummer: 91100421.6
(22) Anmeldetag: 15.01.1991
(51) Int. Cl.: B29C 37/02, B24B 1/00, B24B 5/36

(54) **Vorrichtung zum Abtrennen von überstehenden Teilen von Reifen und dergleichen**
Means for removing protruding parts on tyres or similar articles
Installation pour enlever les parties saillantes des pneus ou produits similaires

(30) Priorität: 17.01.1990 DE 4001213
(43) Veröffentlichungstag der Anmeldung: 24.07.1991
(73) Patentinhaber: Linde Aktiengesellschaft, 65189 Wiesbaden (DE)
(72) Erfinder: Wolf, Erich, W-8023 Pullach (DE)
(74) Vertreter: Schaefer, Gerhard, Dr.

(56) Entgegenhaltungen:
- DE-A- 3 934 676
- FR-A- 2 079 656
- SU-A- 178 091
- US-A- 3 284 958

## Beschreibung

Die Erfindung betrifft eine Vorrichtung zum Abtrennen von überstehenden Teilen, wie Noppen, Grate und dergleichen, von Reifen (Trimmvorrichtung) und ähnlichen Werkstücken durch Verspröden und Brechen dieser Teile, wobei Reifen unterschiedlicher Größen ungeordnet beliebig nacheinander bearbeitbar sind, mit einem Einbaurahmen oder Gehäuse, das eine Versprödungseinrichtung, d.h. eine Abkühleinrichtung und ein Brechwerkzeug beinhaltet sowie Einrichtungen, die die Vereinzelung, das Einspannen, den Transport und die Bearbeitungsbewegung der Reifen im Gehäuse bewerkstelligen.

Reifen werden durch Vulkanisation einer entsprechenden Ausgangsmasse in Formen hergestellt. Dabei wird überschüssige Ausgangsmasse aus der gestaltgebenden Form beim Herstellungsprozeß ausgetrieben und verbleibt in Gestalt von auf dem Reifenprodukt aufsitzenden, länglichen Noppen mit dem Reifenprodukt fest verbunden. Diese Noppen sowie auch andere vom Herstellungsprozeß noch überstehende Teile und Grate sind jedoch zur endgültigen Fertigstellung des erzeugten Reifens zu entfernen.

Hierzu ist bislang das Abschneiden dieser Noppen mit speziellen Schneidwerkzeugen gängig, wobei aber die bei Abnützung der Schneidwerkzeuge entstehende Werkzeugwechselzeit sowie unsaubere Bearbeitung aufgrund nicht vollkommen exakter Führung der Schneidwerkzeuge entlang des Reifenumfangs Probleme darstellen.

Eine auf dem Bearbeitungsprinzip Kaltverspröden und Brechen beruhende Vorrichtung zu diesem Zweck ist aus der DE-OS 31 50 901 bekannt. Die Entfernung der überstehenden Teile und Noppen erfolgt gemäß dieser Offenlegungsschrift durch teilweises Eintauchen der Reifen in ein Kühlmedium und daraus resultierender Versprödung dieser Noppen und Grate, welche dann für das Abtragen derselben durch spezielle Werkzeuge genutzt wird. Die Abtrennung der Noppen und Grate erfolgt gemäß der Offenlegungsschrift insbesondere durch pneumatisch geführte Walzen oder Abstreifbügel. Mit diesen Brechwerkzeugen sind vorwiegend die Laufflächen der Reifen sowie die seitlich daran angrenzenden Bereiche zu bearbeiten. Dabei besitzen diese Werkzeuge einerseits den Nachteil, daß sie den Reifen quasi nur "punktuell" an der Berührungsstelle von Werkzeug und Lauffläche bearbeiten und somit jede Stelle des Reifens mehrfach für eine befriedigende Bearbeitung überstrichen werden muß. Daraus ergibt sich eine erhebliche, nicht unterschreitbare Bearbeitungsdauer. Andererseits ist die Anpaßbarkeit dieser Werkzeuge, also der walzen- oder bügelartigen Werkzeuge, an die Reifenkontur und -breite nur begrenzt möglich, da derartige Werkzeuge zwar beliebig breit aber nicht konturpassend für verschiedene Reifengrößen ausgelegt werden können. Dadurch ergeben siche häufig auf den an die Lauffläche der Reifen sich anschließenden Seitenfläche Bearbeitungsmängel.

Deshalb ergeben sich bei Vorrichtungen gemäß der DE-OS ebenso qualitative Probleme wie Probleme hinsichtlich kurzer Taktzeiten aufgrund nicht unterschreitbarer Bearbeitungsdauern. Darüber hinaus stellt bei den dieser Gattung zugehörigen Vorrichtungen auch der Umstand, daß im laufenden Betrieb in der Regel eine Hin- und Herbewegung des Kühlmediumbades pro zu bearbeitendem Reifen erfolgen muß ein zusätzliches Problem dar, da insbesondere bei kurzen Taktzeiten aufgrund sogenannter Schwappeffekte des Kühlmediums Schwierigkeiten auftreten.

Im allgemeinen hat sich aber eine Bearbeitung nach dem Prinzip Verspröden und Brechen durchaus als günstig erwiesen.

Die Aufgabestellung der vorliegenden Erfindung besteht daher darin, eine nach dem Prinzip der Versprödung und des Brechens arbeitende, verbesserte und insbesondere oben genannte Nachteile vermeidende Vorrichtung zum Abtrennen von überstehenden Teilen von Reifen zu schaffen, wobei insbesondere auch auf die Eignung für kurze Taktzeiten abgezielt wird.

Diese Aufgabe wird mit einer Vorrichtung gelöst, die als Brechwerkzeug ein aus verbundenen Einzelgliedern oder aus einem Drahtgeflecht bestehendes, rippiges, nicht steifes Band besitzt, beispielsweise einen aus der Fördertechnik bekannten Drahtgeflechtgurt, der im Einbaurahmen oder Gehäuse derart aufgehängt ist, daß die kaltversprödeten Reifen mit den Laufflächen an das Band heranführbar sind, wobei sich das Band an das jeweilige Reifenprofil anlehnt und aufgrund der Bearbeitungsbewegung, vorzugsweise einer Rotation des Reifens, die überstehenden Teile abgebrochen werden.

Mit der Verwendung eines rippigen, flexiblen Bandes als Brechwerkzeug wird erreicht, daß alle zu bearbeitenden Flächen eines reifenartigen Werkstücks, insbesondere auch die an die Laufflächen angrenzenden Seitenflächenteile, mit Abriebdruck beaufschlagt werden, wobei der netz- oder gliederartige Aufbau des Bandes eben das Brechen der überstehenden Teile bewirkt. Erfindungsgemäß besonders geeignete Bänder besitzen eine Maschenweite zwischen 5 und 30 mm und besitzen unter Umständen eine eindimensionale Steifigkeit quer zur Bandlängsrichtung.

Die Versprödung der Reifen erfolgt erfindungsgemäß durch Kälte, die durch tiefkalte Medien, insbesondere Flüssiggase, geliefert wird. Dabei ist es auf verschiedenartige Weise möglich, die Kälte auf das Werkstück zu übertragen. Dies kann z.B. durch Besprühen der Reifen mit Flüssiggasen oder durch Erzeugung einer sehr kalten Umgebungsatmosphäre ebenfalls mittels Flüssiggasen erfolgen. Als besonders vorteilhaft hat sich jedoch erfindungsgemäß gezeigt, als Versprödungseinrichtung einen mit einem tiefkalten Medium, vorzugsweise Flüssigstickstoff, versorgbaren Kühlmedium-Behälter vorzusehen, der geeignet im Einbaurahmen oder Gehäuse anzuordnen und so auszubilden ist, daß er wenigstens einen aufrechten Reifen etwa bis zu 1/3 seines Durchmessers aufnehmen kann.

Mit einem Kühlmediumbad wird eine besonders schnelle und effiziente Abkühlung der vom Herstellungsprozeß noch aufgeheizten Reifen erzielt, was gerade auch im Hinblick auf kurze Taktzeiten wesentlich ist.

Eine prinzipiell besonders vorteilhafte Vorrichtung gemäß der Erfindung ergibt sich, wenn im Einbaurahmen oder Gehäuse steuerbare Einspann-, Transport- und Antriebseinrichtungen installiert sind, die vielfältige Bewegungsabläufe innerhalb des Gehäuses zum Transport und zur Bearbeitung der Reifen ermöglichen und andererseits das Kühlmediumbad fest im Gehäuse installiert ist.

Die feste Installation des Kühlmediumbades, d.h. daß das Kühlmediumbad während des Betriebs der Anlage unbewegt bleibt, bewirkt, daß Taktzeitbegrenzungen aufgrund überschwappenden Kühlmediums bei zu schnellen Badbewegungen von vornherein vermieden werden. Andererseits wird diese Einschränkung in den Konstruktionsmöglichkeiten durch geschickt angeordnete, geeignete Bewegungsabläufe liefernde Transportelemente ausgeglichen.

In einer besonders vorteilhaften Variante der Erfindung wird das zum Brechen dienende Band im Kühlmediumbad selbst angeordnet.

Mit dieser Maßnahme erhält man eine sehr effiziente Version einer derartigen Vorrichtung, da das Verspröden und Brechen der zu entfernenden Teile im wesentlichen gleichzeitig erfolgt. Damit sind aufgrund geringster Bearbeitungszeiten und kürzester Transport- und Bearbeitungsbewegungen minimale Taktzeiten möglich. Grundsätzlich erweist sich bei dieser Vorrichtungsvariante die Einfachheit des angewandten Brechwerkzeugs als Vorteil, da derartige Bänder problemlos in Tieftemperaturbädern angeordnet werden können - im Gegensatz zu pneumatisch gehaltenen Walzen und Bügeln. Jedoch kann auch die Anordnung des erfindungsgemäßen Brechwerkzeugs außerhalb des Kühlmediumbades gewählt werden, wobei der Versprödungs- und der Abtrennvorgang gleichzeitig oder zeitlich und im Transportablauf aufeinanderfolgend erfolgen können.

Im Falle der Anordnung im Kühlmediumbad ist es von Vorteil, wenn der Boden des Kühlmediumbades trichterförmig ausgebildet und mit einer sich an die Trichterform anschließenden Schleusenkammer versehen ist, damit von Zeit zu Zeit die von den Reifen abgebrochenen Teile mit einem Ausschleusvorgang aus dem Kühlmediumbehälter entfernt werden können.

Mit Vorteil wird das zum Brechen dienende Band mit einer speziellen Haltevorrichtung installiert. Insbesondere geeignet ist ein das Band einfassender rechteckiger Rahmen, in dem das Band an zwei gegenüberliegenden Rahmenstäben befestigt ist und die verbleibenden zwei Stäbe längenverstellbar sind.

Mit dieser Haltevorrichtung kann das Band vor der Montage bereits mit dem richtigen Durchhang versehen werden, so daß es an die auftretenden Reifenkonturen angepaßt ist.

Des weiteren ist es vorteilhaft, wenn das zum Brechen dienende Band gegebenenfalls mit seiner Haltevorrichtung federnd installiert ist.

Dadurch wird einerseits eine erweiterte Anpaßungsfähigkeit der Einrichtung auf verschiedene Reifenkonturen- und -durchmesser erreicht, während sich andererseits der Anpreßdruck des Brechwerkzeugs auf den Reifen günstig regelt.

In einer weiteren, hinsichtlich eines anderen Aspekts variierten Ausgestaltung der Erfindung wird insbesondere ein Gehäuse vorgeschlagen, das im wesentlichen geschlossen ausgebildet ist, wobei in der Umgebung der Eintrittsstelle der Reifen in das Gehäuse ein Abzugsrohr mit dem Gehäuse verbunden ist, mittels dessen Gas aus dem Gehäuse abgesaugt wird und so im Gehäuseinnenraum eine Gasströmung im Gegenstrom zur Reifenzufuhr entsteht.

Dadurch wird eine Vorkühlung der ja in der Regel vom Herstellungsprozeß noch aufgeheizten Reifen vor der eigentlichen Abkühlung durch verdampftes Flüssiggas erreicht. Dies führt zu einer niedrigeren Zutrittstemperatur zur Abkühleinrichtung und ergibt so eine schnellere und insgesamt ökonomischere Abkühlung der zu bearbeitenden Reifen.

Im folgenden wird anhand der schematischen Zeichnungen ein Ausführungsbeispiel für eine erfindungsgemäße Vorrichtung erläutert.

Es zeigen:
- Figur 1: einen schematischen Längsschnitt durch eine erfindungsgemäße Vorrichtung,
- Figur 2: eine detaillierte Teilansicht aus Figur 1 im Schnitt, die das Kühlmediumbad und den darin angeordneten Drahtgeflechtgurt zeigt.
- Figur 3: eine Vorderansicht des Kühlmediumbades im Schnitt.

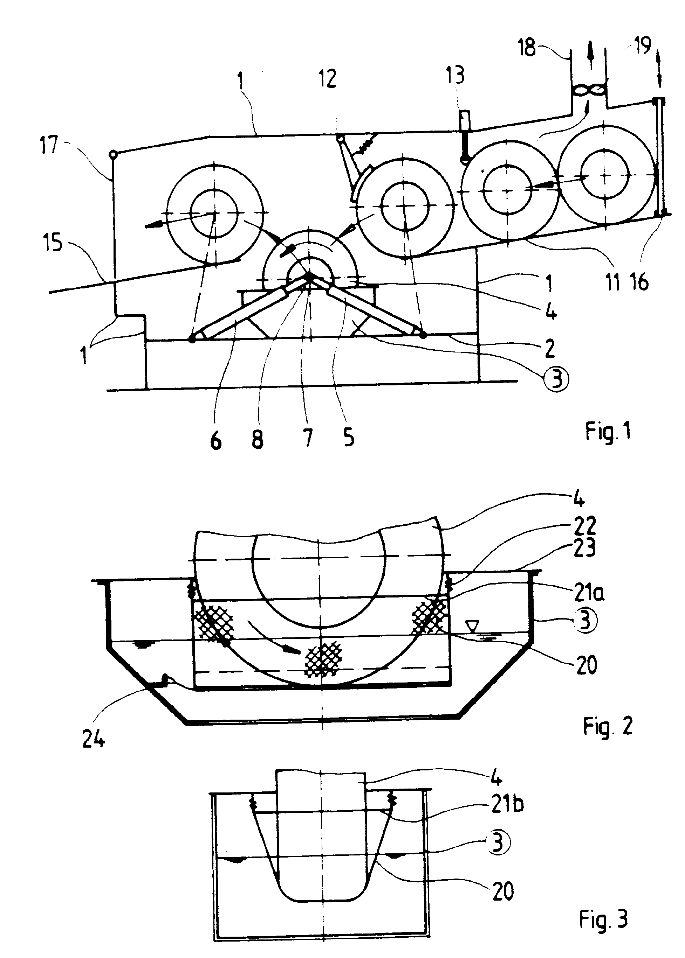

In Figur 1 ist zunächst mit den Linien 1 ein Gehäuse 1 für die erfindungsgemäße Trimmvorrichtung skizziert. Auf einer Basisplatte 2 innerhalb des Gehäuses ist ein Behälter 3 für das Kühlmedium etwa gehäusemittig fest installiert. In vertikaler Positionierung zu etwa 1/4 im Kühlmediumbad eingetaucht wird ein Reifen 4 von Pneumatikzylindern 5, 6 sowie in der Zeichnung nicht sichtbaren, weiteren zwei, parallel arbeitenden Pneumatikzylindern vermittels einer an den Endpunkten der Pneumatikzylinder aufliegenden Tragachse 7 mit Klemmkonussen 8 gehalten. Über eine schiefe Ebene 11 werden dieser Halte-, Transportier- und Antriebsvorrichtung 5, 6, 7, 8 weitere unbearbeitete Reifen bis zu einem Punkt zugeführt, der durch eine Sperre 12 bestimmt wird. Durch eine weitere, der Sperre 12 vorgelagerten Sperre 13 wird die Vereinzelung und gegebenenfalls Größenmessung der "zufließenden" Reifen erreicht. Der Zufuhrebene 11 gegenüber liegt eine weitere schiefe Ebene 15, die dem Abtransport der bearbeiteten Reifen dient. Ist ein Reifen fertig bearbeitet, wird dieser durch Ausfahren des Pneumatikzylinders 5 bei starrem Zylinder 6 auf die Abtransportebene 15 gehoben, dort aus der Halte- und Antriebsvorrichtung, d.h. den Haltekonussen 8 entlassen und verläßt dann aufgrund der schiefen Anordnung der Ebene 15 die Anlage, wobei selbstverständlich, ebenso wie bei der Zufuhrebene 11, noch weitere, nicht dargestellte seitliche Führungseinrichtungen vorhanden sind. Das gezeigte Gehäuse 1 ist im wesentlichen geschlossen, was eingangsseitig insbesondere durch eine taktweise sich öffnende und wieder schließende Schiebetür 16 und ausgangsseitig durch eine Klappe 17 erreicht wird. Benachbart zur Eintritts-Schiebetür 16 ist im Deckenbereich des Gehäuses ein Abzugsrohr 18, in dem ein Ventilator 19 untergebracht ist, angeordnet. Damit wird bei laufendem Ventilator im Gehäuse ein Gasstrom in Eintrittsrichtung erzeugt, der für eine Vorkühlung der einlaufenden Reifen sorgt.

Nach der Ablage eines fertig bearbeiteten Reifens wird der Pneumatik-Zylinder 5 ausgefahren, wodurch die Doppelzylinderanordnung zur Zufuhrebene 11 geschwenkt wird, während gleichzeitig Zylinder 6 geeignet einfährt, um einen neuen Reifen von der Zuführebene 11 aufzunehmen. Anschließend wird unter Überwindung der Gegenkraft von Sperre 12 der mit den Konussen 8 eingespannte und zentrierte Reifen durch entsprechende Steuerung der Zylinder 5 und 6 in das Kühlmediumbad 3 in geeigneter Weise eingetaucht. Direkt im Kühlmediumbad findet im gezeigten Ausführungsbeispiel gleichzeitig die Versprödung und Abtrennung der unerwünschten, überstehenden Teile vom zu bearbeitenden Reifen statt, wobei als Brechwerkzeug ein aus der Fördertechnik bekannter Drahtgeflechtgurt angewendet wird, der im Kühlmediumbad selbst installiert ist.

In den Figuren 2 und 3 ist eine Installation eines Drahtgeflechtgurts 20 im Kühlmediumbehälter 3 im einzelnen gezeigt. Der Drahtgeflechtgurt 20 ist an einem waagrecht aufgehängten, rechteckigen Rahmen mit den sichtbaren Rahmenstäben 21a, 21b befestigt. Der Rahmen selbst hängt an seinen Eckpunkten mit Federn an einer auf dem Kühlmediumbehälter aufliegenden Abdeckplatte 23. Die Abdeckplatte 23 hat einen Ausschnitt, der zum Einführen eines senkrecht orientierten Reifens in das Kühlmediumbad ausreicht. Im Kühlmediumbad 3 ist eine weitere Arretierung 24 für den Drachtgeflechtgurt in geeigneter Höhe, beispielsweise in Form eines Hackens mit zugehöriger Schlaufe untergebracht. Sie dient der seitlichen Stabilisierung des Drahtgeflechtgurts, auf den ja im Betrieb vor allem in seitlicher Richtung zeigende Kräfte wirken.

Mit der gezeigten und beschriebenen Vorrichtung ergibt sich bei Durchführung der Bearbeitungsbewegung, nämlich der Rotation des Reifens 4, eine schnelle, alle wesentlichen Flächen überdeckende Abtrennung von überstehenden Teilen vom Reifen 4, sowie ingesamt ein sehr schneller sowie ökonomischer Arbeitsablauf.

## Patentansprüche

1. Vorrichtung zum Atrennen von überstehenden Teilen, wie Noppen, Grate und dergleichen, von Reifen (4) und ähnlichen Werkstücken durch Verspröden und Brechen dieser Teile, wobei Reifen (4) unterschiedlicher Größen ungeordnet beliebig nacheinander bearbeitbar sind, mit einem Einbaurahmen oder Gehäuse (1), das eine Versprödungseinrichtung (3), d.h. eine Abkühleinrichtung, und ein Brechwerkzeug beinhaltet sowie Einrichtungen (5, 6, 7, 8), die die Vereinzelung, das Einspannen, den Transport und die Bearbeitungsbewegung der Reifen (4) im Gehäuse bewerkstelligen dadurch gekennzeichnet, daß als Brechwerkzeug ein aus verbundenen Einzelgliedern oder aus einem Drahtgeflecht bestehendes, rippiges, nicht steifes Band (20) im Einbaurahmen oder Gehäuse 1 derart aufgehängt ist, daß die kaltversprödeten Reifen mit den Laufflächen an das Band heranführbar sind, wobei sich das Band (20) an das jeweilige Reifenprofil anlehnt und aufgrund der Bearbeitungsbewegung, vorzugsweise einer Rotation des Reifens, die überstehenden Teile abgebrochen werden.

2. Vorrichtung nach Anspruch 1, dadurch gekennzeichnet, daß als Versprödungseinrichtung ein mit einem tiefkalten Medium, vorzugsweise Flüssigstickstoff, versorgbarer Kühlmedium-Behälter (3) vorgesehen ist, der geeignet im Einbaurahmen oder Gehäuse anzuordnen und auszubilden ist, daß er wenigstens einen aufrechten Reifen etwa bis zu 1/3 seines Durchmessers aufnehmen kann.

3. Vorrichtung nach Anspruch 2, dadurch gekennzeichnet, daß im Einbaurahmen oder Gehäuse (1) steuerbare Einspann-, Transport- und Antriebseinrichtungen (5, 6, 7, 8) installiert sind, die vielfältige Bewegungsabläufe innerhalb des Gehäuses zum Transport und zur Bearbeitung der Reifen ermöglichen und andererseits das Kühlmediumbad (3) fest im Gehäuse installiert ist.

4. Vorrichtung nach Anspruch 2 oder 3, dadurch gekennzeichnet, daß das zum Brechen dienende Band (20) im Kühlmediumbad (3) angeordnet ist.

5. Vorrichtung nach Anspruch 4, dadurch gekennzeichnet, daß der Boden des Kühlmediumbades (3) trichterförmig ausgebildet und mit einer sich an die Trichterform anschließenden Schleusenkammer versehen ist.

6. Vorrichtung nach Anspruch 2 oder 3, dadurch gekennzeichnet, daß das zum Brechen dienende Band (20) außerhalb des Kühlmediumbades (3) angeordnet ist.

7. Vorrichtung nach einem der Ansprüche 1 bis 5, dadurch gekennzeichnet, daß das zum Brechen dienende Band (20) mit einer speziellen Haltevorrichtung installiert ist, die aus einem rechteckigen, das Band (20) einfassenden Rahmen (21) besteht, in dem das Band an zwei gegenüberliegenden Rahmenstäben befestigt ist und die verbleibenden zwei Stäbe längenverstellbar sind.

8. Vorrichtung nach einem der Ansprüche 1 bis 7, dadurch gekennzeichnet, daß das zum Brechen dienende Band (20) gegebenenfalls mit der zugehörigen Haltevorrichtung federnd installiert ist.

9. Vorrichtung nach einem der Ansprüche 1 bis 8, dadurch gekennzeichnet, daß das Gehäuse (1) im wesentlichen geschlossen ausgebildet ist und in der Umgebung der Eintrittsstelle der Reifen in das Gehäuse ein Abzugsrohr (18) mit dem Gehäuse verbunden ist, mittels dessen Gas aus dem Gehäuse abgesaugt wird und so im Gehäuseinnenraum eine Gasströmung im Gegenstrom zur Reifenzufuhr entsteht.

## Claims

1. A device for separating projecting parts, such as lumps, ridges and the like, from tyres (4) and similar workpieces by embrittlement and breakage of these parts, where tyres (4) of different sizes can be consecutively processed unsorted and in arbitrary fashion, with a mounting frame or housing (1) which contains an embrittlement device (3), i.e. a cooling device, and a breaking tool, as well as devices (5, 6, 7, 8) which effect the separation, fixing, transport and processing movement of the tyres (4) in the housing, characterised in that by way of breaking tool, a ribbed, non-rigid band (20) composed of connected individual members or of a wire mesh is suspended in the mounting frame or housing (1) in such manner that the tread surfaces of the cold-embrittled tyres can be brought towards the band, where the band (20) leans against the respective tyre profile and the projecting parts are broken off as a result of the processing movement, preferably a rotation of the tyre.

2. A device as claimed in Claim 1, characterised in that a cooling medium container (3) which can be supplied with a low-temperature medium, preferably liquid nitrogen, is provided as embrittlement device, which container (3) is to be arranged in a suitable fashion in the mounting frame or housing and is to be designed in such manner that it can accommodate up to approximately 1/3 of the diameter of at least one upright tyre.

3. A device as claimed in Claim 2, characterised in that controllable fixing-, transport- and drive devices (5, 6, 7, 8) are installed in the mounting frame or housing (1), which devices (5, 6, 7, 8) facilitate manifold movement sequences within the housing for the transport and processing of the tyres, and on the other hand the cooling medium bath (3) is permanently installed in the housing.

4. A device as claimed in Claim 2 or 3, characterised in that the band (20) which effects the breakage is arranged in the cooling medium bath (3).

5. A device as claimed in Claim 4, characterised in that the base of the cooling medium bath (3) is designed to be funnel shaped and is provided with a sluice chamber adjoining the funnel formation.

6. A device as claimed in Claim 2 or 3, characterised in that the band (20) which effects the breakage is arranged outside the cooling medium bath (3).

7. A device as claimed in one of Claims 1 to 5, characterised in that the band (20) which effects the breakage is installed with a special retaining device which consists of a rectangular frame (21) which encloses the band (20) and in which the band is attached to two oppositely disposed frame members and the remaining two members are longitudinally adjustable.

8. A device as claimed in one of Claims 1 to 7, characterised in that optionally the band (20) which effects the breakage is resiliently installed with the associated retaining device.

9. A device as claimed in one of Claims 1 to 8, characterised in that the housing (1) is designed to be substantially closed and in the vicinity of the inlet point of the tyres into the housing an outlet pipe (18) is connected to the housing, by means of which outlet pipe gas is sucked out of the housing, and thus in the interior of the housing a gas flow is produced in counterflow to the supply of tyres.

## Revendications

1. Dispositif pour ébarber des parties faisant saillie telles que des nodosités, des bavures et analogues, de bandages pneumatiques (4) et des outils similaires, par fragilisation et rupture de ces parties, compte tenu que les bandages pneumatiques (4) de tailles différentes se présentent dans le désordre, de préférence l'un à la suite de l'autre, et étant traités dans un cadre de montage ou un châssis (1) qui renferme un agencement (3) de fragilisation, c'est-à-dire une installation de réfrigération, et un outil de coupe, de même que des dispositifs (5, 6, 7, 8) par lesquels les bandages pneumatiques sont rangés un par un, mis en serrage, transportés et déplacés dans le châssis lors du traitement, caractérisé en ce qu'il se présente comme un outil d'ébarbage constitué de plusieurs organes individuels reliés entre eux, ou bien comme une bande non rigide nervurée (20) se composant de fils métalliques, par exemple, d'une ceinture en filet métallique, comme dans la technique des transporteurs, qui est suspendue sur des cadre de montage ou châssis (1) de telle façon que les bandages pneumatiques avec les surfaces de roulement ébarbés à froid puissent être retournés sur la bande (20), auquel cas la bande (20) s'adapte sur le profil du bandage pneumatique en cause, et du fait du déplacement d'ébarbage, de préférence une rotation du bandage, les parties en saillie sont coupées.

2. Dispositif selon la revendication 1, caractérisé en ce que l'on a prévu, comme installation de fragilisation, un récipient (3) avec un milieu hautement refroidi, de préférence de l'azote liquide, récipient qui est disposé dans un cadre de montage ou un châssis et qui est conçu de façon qu'il puisse au moins recevoir un bandage pneumatique vertical jusqu'à peu près le 1/3 de son diamètre.

3. Dispositif selon la revendication 2, caractérisé en ce que les agencements (5, 6, 7, 8) contrôlables de serrage, de transport et d'entraînement, sont installés à l'intérieur du cadre de montage ou châssis (1) de manière à permettre le transport et l'ébarbage du bandage pneumatique et en ce que, d'autre part, la cuve de réfrigérant (3) est installée à demeure dans le châssis.

4. Dispositif selon la revendication 2 ou 3, caractérisé en ce que la bande (20) qui sert à l'ébarbage est aménagée à l'intérieur de la cuve de réfrigérant (3).

5. Dispositif selon la revendication 4, caractérisé en ce que le fond de la cuve de réfrigération (3) présente une forme d'entonnoir et en ce qu'elle est munie d'une enceinte formant écluse qui est contiguë à la partie ayant une forme d'entonnoir.

6. Dispositif selon la revendication 2 ou 3, caractérisé en ce que la bande (20) servant à l'ébarbage est aménagée à l'extérieur de la cuve de réfrigération (3).

7. Dispositif selon l'une des revendications 1 à 5, caractérisé en ce que la bande (20) qui sert à l'ébarbage est mise en place avec une installation spéciale d'arrêt qui est réalisée en fait comme un cadre (21) rectangulaire entourant la bande (20) et dans lequel la bande est fixée à deux tiges de cadre se faisant face et en ce que les deux tiges restantes sont déplaçables longitudinalement.

8. Dispositif selon l'une des revendications 1 à 7, caractérisé en ce que la bande (20) servant à l'ébarbage est installée éventuellement en étant solidaire d'un dispositif d'arrêt présentant une certaine élasticité.

9. Dispositif selon l'une des revendications 1 à 8, caractérisé en ce que le châssis (1) est conçu pour être essentiellement clos et en ce que, au voisinage de l'emplacement d'entrée des pneumatiques à l'intérieur du châssis, ce dernier soit réuni à une conduite (18) de tirage par laquelle du gaz est extrait du châssis et que, de la sorte, un courant de gaz se crée dans l'espace intérieur du châssis tout en se propageant à contre-courant du trajet d'amenée des pneumatiques à traiter.
